# EUROPÄISCHE PATENTSCHRIFT

(11) **EP 2 380 784 B1**
(45) Veröffentlichungstag und Bekanntmachung des Hinweises auf die Patenterteilung: **19.09.2012**
(21) Anmeldenummer: 11003121.8
(22) Anmeldetag: 13.04.2011
(51) Int. Cl.: B60R 21/13

(54) **Rückhaltevorrichtung für einen Fahrer eines Fahrzeugs**
Retention device for a driver of a vehicle
Dispositif de retenue pour un conducteur de véhicule

(30) Priorität: 22.04.2010 DE 202010006048 U
(43) Veröffentlichungstag der Anmeldung: 26.10.2011
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- DE-A1- 10 335 800
- DE-A1-102005 035 392
- DE-A1-102005 038 265
- DE-A1-102006 032 558
- DE-A1-102006 046 988
- US-B1- 6 672 619

## Beschreibung

Die Erfindung betrifft eine Rückhaltevorrichtung für einen Fahrer eines Fahrzeugs gemäß dem Oberbegriff des Patentanspruchs 1.

Aus der DE 10 2006 056 639 A1 ist eine Rückhaltevorrichtung für einen Gabelstapler bekannt, welche einen verschwenkbaren Schutzbügel aufweist. An diesem Schutzbügel ist ein Netz festgelegt, dessen Gegenende am Dach des Flurförderfahrzeugs gehalten ist. Dieses Netz verhindert zuverlässig ein Überrollen des Fahrers beim Umkippen des Flurförderfahrzeugs. Nachteilig ist jedoch, daß sich dieses Netz beim Verschwenken des Schutzbügels leicht verfangen kann.

Der Erfindung liegt die Aufgabe zugrunde, eine Rückhaltevorrichtung der eingangs genannten Art zu schaffen, das einen wirksamen Schutz für den Fahrer beim Umkippen des Fahrzeugs bietet und auch bei kleinen Fahrzeugen zuverlässig genutzt werden kann.

Diese Aufgabe wird mit den Merkmalen des Patentanspruchs 1 gelöst.

Die Rückhaltevorrichtung gemäß Anspruch 1 weist mindestens einen seitlich neben dem Fahrersitz angeordneten Schutzbügel auf, der um eine Achse zwischen einer in etwa vertikalen Freigabestellung und einer in etwa horizontalen Rückhaltestellung verschwenkbar ist. In der Freigabestellung kann der Fahrer ohne Behinderung durch den Schutzbügel in das Fahrzeug ein- bzw. aus diesem aussteigen, was insbesondere unter beengten Platzverhältnissen, wie beispielsweise in Lagern, von Bedeutung ist. Außerdem besteht so nicht die Gefahr, daß sich der Fahrer durch die Rückhaltevorrichtung behindert fühlt, so daß die Rückhaltevorrichtung eine ausreichend hohe Akzeptanz durch den Fahrer besitzt und nicht von diesem einfach abgebaut wird. Vorzugsweise befindet sich der Schutzbügel in der Rückhaltestellung im Hüftbereich des Fahrers und erstreckt sich über mindestens die Hälfte des Fahrersitzes, um einen ausreichenden Schutz des Fahrers beim Umkippen des Fahrzeugs zu gewährleisten. Dabei ist es oft wünschenswert, daß der Schutzbügel kleinbauend ausgebildet ist, um auch in kleine Fahrzeugkabinen montierbar zu sein. Damit ergibt sich jedoch das Problem, daß der Fahrer beim Umkippen des Fahrzeugs oberseitig über den Schutzbügel rollen kann, so daß der Schutzbügel keine ausreichende Schutzwirkung mehr bietet. Zu diesem Zweck ist am Schutzbügel mindestens ein Netz befestigt, dessen Gegenende am Fahrzeug, vorzugsweise im Dachbereich festgelegt ist. Befindet sich der Schutzbügel in der Rückhaltestellung, so erstreckt sich dann das Netz vom Schutzbügel bis zum Dach des Fahrzeugs und verhindert damit zuverlässig ein Herausschleudern oder bewußtes Abspringen des Fahrers vom Fahrzeug.

Dabei hat sich jedoch als Problem gezeigt, daß sich das Netz oftmals am Schutzbügel verfängt, wenn dieser verschwenkt wird. Zur Behebung dieses Problems weist die Rückhaltevorrichtung mindestens eine Feder auf, die das Netz beim Verschwenken des Schutzbügels in die Freigabestellung gegen den Schutzbügel zieht. Dabei ist es nicht erforderlich, daß die Feder über den gesamten Schwenkweg des Schutzbügels eine Zugkraft auf das Netz ausübt, vielmehr reicht es aus, wenn diese Zugkraft wenigstens zu einem Teil des Schwenkweges des Schutzbügels aufrechterhalten werden kann. Damit wird das Netz beim Verschwenken des Schutzbügels sauber aufgefächert und kann sich somit nicht mehr an Teilen des Schutzbügels verfangen. Die dauerhafte Funktion der Rückhaltevorrichtung ist damit sichergestellt.

Gemäß Anspruch 2 ist es vorteilhaft, wenn der Federzug in einem Schwenkbereich des Schutzbügels aufrechterhalten wird, der sich mindestens von der Freigabestellung bis zu einer Winkelhalbierenden zwischen der Freigabestellung und einer Totpunktstellung erstreckt. Die Totpunktstellung ist dabei jene Stellung des Schutzbügels, bei der die Zugkraft der Feder auf das Netz zur Schwenkachse des Schutzbügels gerichtet ist. An diesem Totpunkt verändert sich die Funktion der Feder erheblich. Zwischen der Freigabestellung und dem Totpunkt zieht die Feder am Netz - relativ zum Schutzbügel betrachtet - von oben, während sie nach dem Totpunkt von unten zieht. Es hat sich herausgestellt, daß oberhalb der Totpunktstellung die Zugkraft der Feder nicht mehr erforderlich ist, da sich in dieser Stellung das Netz nicht mehr am Schutzbügel verfangen kann. Wirklich kritisch ist die Gefahr des Verfangens des Netzes am Schutzbügel hauptsächlich in Schwenklagen nahe der Rückhaltestellung, so daß in vielen Fällen auf die Federkraft ab der Winkelhalbierenden zwischen der Rückhaltestellung und der Totpunktstellung verzichtet werden kann.

Zur weiteren Verbesserung der Funktionsweise der Feder ist es gemäß Anspruch 3 günstig, wenn der Federweg bis zur Totpunktstellung reicht. Oberhalb der Totpunktstellung ist eine weitere Federwirkung grundsätzlich unerheblich.

Um die Wirkung der Feder auf das Netz möglichst zu optimieren, ist es gemäß Anspruch 4 vorteilhaft, wenn die Feder nahe der Vorderkante am Netz angreift. Dadurch wird die Vorderkante des Netzes sauber aufgereiht. Auf diese Weise kann sich der Rest des Netzes nicht mehr am Schutzbügel verfangen.

Gemäß Anspruch 5 ist es vorteilhaft, wenn die Feder an mehreren Punkten am Netz angreift. Vorzugsweise wird die Feder oder ein mit der Feder zusammenwirkendes Band durch mehrere Ösen des Netzes gefädelt. Alternativ können statt der Ösen auch Stege des Netzes eingesetzt werden, so daß die Feder bzw. ein mit der Feder zusammenwirkendes Band wechselweise auf beiden Seiten des Netzes geführt ist. Damit ist sichergestellt, daß sich das Netz wie ein Vorhang auffädelt und geordnet am Schutzbügel sammelt.

Zur Erzielung eines einfachen mechanischen Aufbaus ist es gemäß Anspruch 6 günstig, wenn die Feder im Schutzbügel vorgesehen ist. Aus geometrischen Gründen verläuft die Feder vorzugsweise radial zur Schwenkachse des Schutzbügels. Um dennoch eine zum Schutzbügel gerichtete Kraft auf das Netz ausüben zu können, ist der Feder mindestens eine Umlenkung zugeordnet, die die Federkraft in die gewünschte Richtung umlenkt. Als Umlenkung kann vorzugsweise ein Glitteil oder eine Rolle eingesetzt werden.

Insbesondere bei der Realisierung der Feder als Spiralfeder ist es gemäß Anspruch 7 vorteilhaft, wenn die Feder mit einem Band verbunden ist, welches am Netz angreift. Die Feder bleibt damit vom Netz fern und kann sich nicht an Teilen des Netzes verhaken.

Alternativ ist es gemäß Anspruch 8 günstig, wenn die Feder von mindestens einem Elastomer gebildet ist. Hierdurch ergibt sich ein sehr einfacher Aufbau, wobei allerdings der Federweg in diesem Fall beschränkt ist. Dies kann beispielsweise durch mehrere Umlenkungen ausgeglichen werden, so daß auf diese Weise der Federweg entsprechend vergrößert wird.

Um den Schutzbügel einfach montieren zu können, ist dieser an einem Halter verschwenkbar gehalten. Dieser Halter ist wiederum mittels Haltemittel am Fahrzeug festgelegt, so daß der Schutzbügel sicher mit dem Fahrzeug verbunden ist. Damit besteht allerdings die Gefahr, daß sich das Netz, das am Schutzbügel aufgereiht ist, an den Haltemitteln des Halteteils verfängt. Um dies zuverlässig zu verhindern, sind die Haltemittel im Bereich des freien Endes des Schutzbügels von mindestens einer Steckverbindung gebildet.

Um sicherzustellen, daß sich das Netz sauber aufreiht, ist es gemäß Anspruch 10 günstig, wenn am Ende des Schutzbügels mindestens ein Netzfänger vorgesehen ist. Dieser Netzfänger wird vorzugsweise von einer Gabel gebildet, die radial außenseitig offen ist.

Der Erfindungsgegenstand wird beispielhaft anhand der Zeichnung erläutert, ohne den Schutzumfang zu beschränken.

Es zeigt:
- Figur 1: eine Seitenansicht eines schematisch dargestellten Flurförderfahrzeuges,
- Figur 2: eine Detaildarstellung der Rückhaltevorrichtung gemäß Figur 1 in der Rückhaltestellung,
- Figur 3: eine Detaildarstellung der Rückhaltevorrichtung gemäß Figur 1 in der Todpunktstellung und
- Figur 4: eine Detaildarstellung der Rückhaltevorrichtung gemäß Figur 1 in der Freigabestellung.

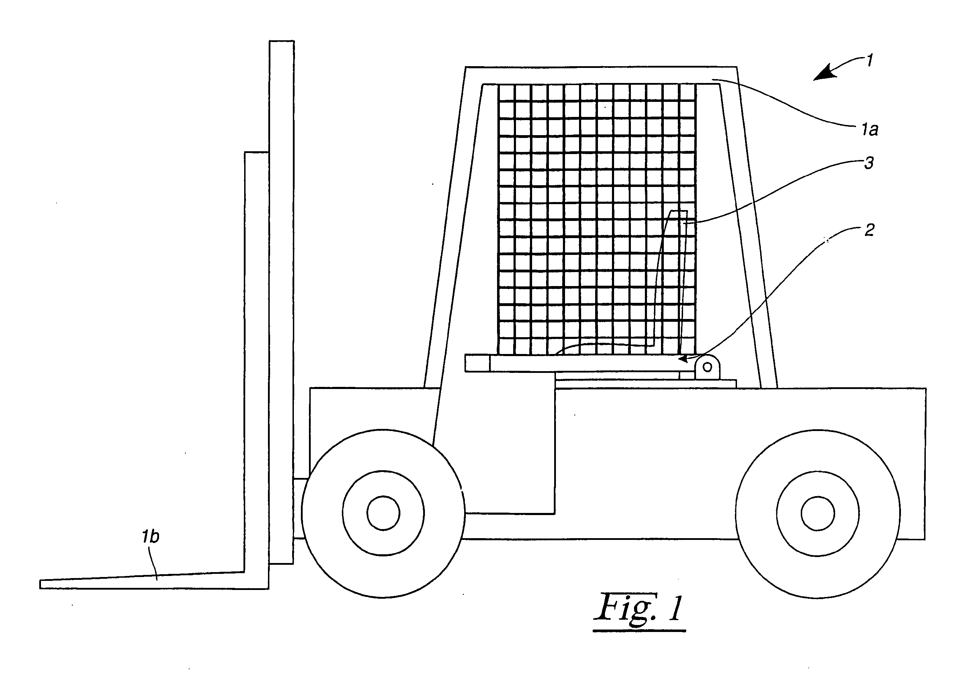

Figur 1 zeigt schematisch ein Fahrzeug 1, insbesondere einen Gabelstapler, der mit einer Rückhaltevorrichtung 2 für einen nicht dargestellten Fahrer ausgerüstet ist. Das Fahrzeug 1 weist eine Dachkonstruktion 1a auf, die eine offene Kabine bildet. Innerhalb dieser Kabine ist ein Fahrersitz 3 angeordnet. Das Fahrzeug 1 weist außerdem ein Hebewerkzeug 1b auf, das jedoch nicht Gegenstand der Erfindung ist, so daß auf dieses im weiteren nicht näher eingegangen wird.

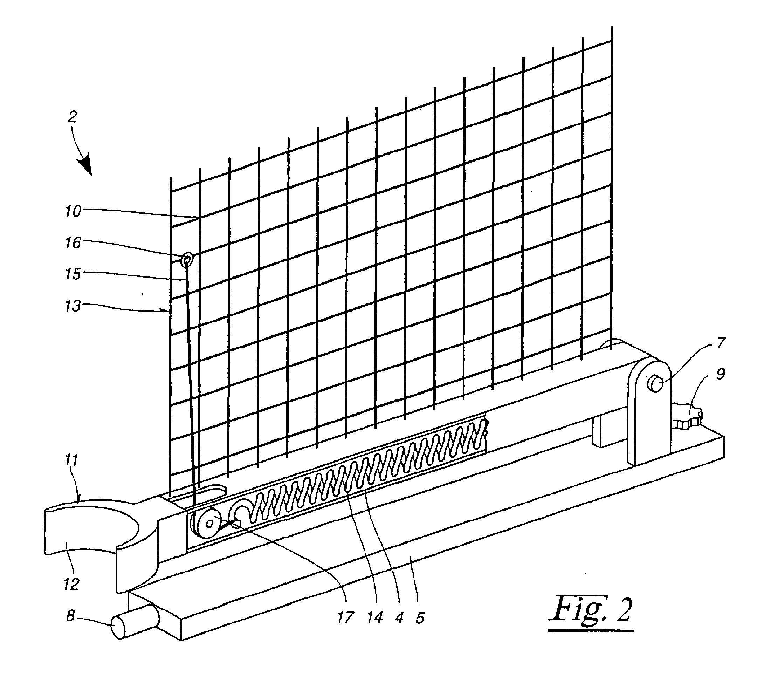

Die Figur 2 zeigt eine Detaildarstellung gemäß Figur 1, wobei sich der Schutzbügel 4 in der Rückhaltestellung befindet. Der Schutzbügel 4 ist an einer Halterung 5 schwenkbar gehalten. Zu diesem Zweck ist an der Halterung 5 des Schutzbügels 4 eine Achse 7 abgestützt, um die der Schutzbügel 4 schwenkbar ist. Die Verschwenkung kann von Hand oder auch motorisch erfolgen. Zur Montage der Halterung 5 am Fahrzeug 1 sind Haltemittel 8, 9 vorgesehen. Das Haltemittel 8 besteht dabei aus einer Steckverbindung, während das Haltemittel 9 als Schraube ausgebildet ist.

Am Schutzbügel 4 ist ein Netz 10 gehalten, dessen nicht dargestelltes Gegenende an der Dachkonstruktion 1a festgelegt ist. Um das Netz 10 ordnungsgemäß am Schutzbügel 4 aufzufächern, ist ein freies Ende 11 des Bügels 4 mit einem Netzfänger 12 ausgerüstet. Dieser Netzfänger 12 besteht aus einer endseitig offenen Gabel 12, die eine Vorderkante 13 des Netzes 10 aufnimmt.

Es hat sich herausgestellt, daß der Netzfänger allein völlig unzureichend ist, da die Eigendynamik des Netzes während des Schwenkvorgangs des Schutzbügels 4 das Verhalten des Netzes 10 unberechenbar macht. Zu diesem Zweck ist im Schutzbügel 4 eine Feder 14 vorgesehen. Um diese erkennen zu können, ist der Schutzbügel 4 aufgebrochen dargestellt. An der Feder 14 ist ein Band 15 gehalten, welches in eine Öse 16 des Netzes 10 eingreift. Um eine vertikal zum Schutzbügel 4 gerichtete Kraft durch die horizontal liegende Feder 14 zu erreichen, wird das Band 15 an einer Umlenkung 17 in Form einer Rolle umgelenkt.

Beim Verschwenken des Schutzbügels 4 zieht nun die Feder 14 über das Band 15 das Netz 10 zum Schutzbügel 4 und hält die Vorderkante 13 des Netzes 10 nahe dem Netzfänger 12, so daß das Netz 10 ordnungsgemäß im Netzfänger 12 aufgenommen wird.

Grundsätzlich könnte die Feder 4 derart ausgebildet sein, daß sie eine ausreichende Zugkraft über den gesamten Schwenkweg des Schutzbügels 4 auf das Netz 10 ausübt. Dies ist jedoch aus mehreren Gründen nachteilig, so daß die Zugwirkung der Feder 14 nur über einen Teil des Schwenkweges des Schutzbügels 4 aufrechterhalten wird. Dies hat den Vorteil, daß die Feder 14 kleinbauender ausgebildet werden kann. Außerdem wird auf diese Weise verhindert, daß die Feder 14 den Schwenkvorgang negativ beeinflußt.

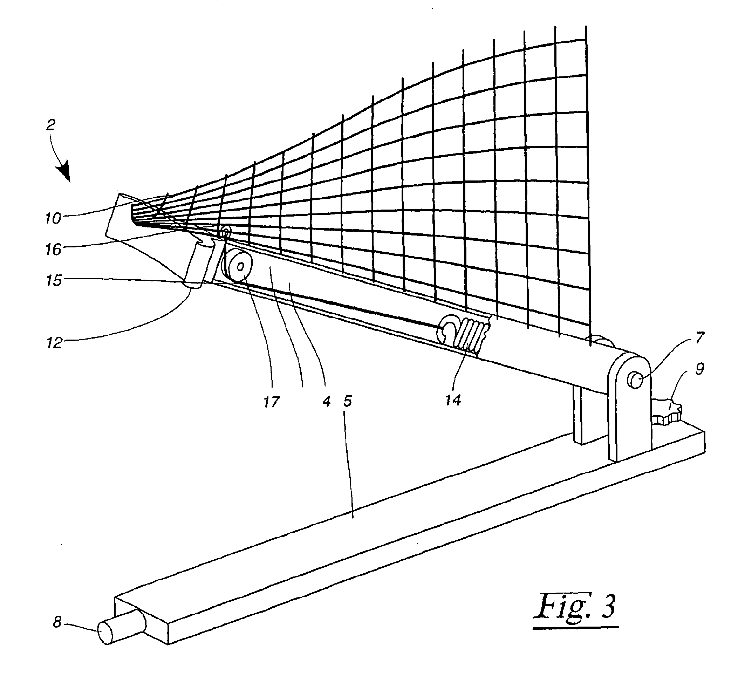

Vorzugsweise wird die Feder 14 derart eingestellt, daß sie ab einem in Figur 3 dargestellten Totpunkt keine Zugkraft mehr auf das Netz 10 ausüben kann. Dieser Totpunkt ist so definiert, daß die Kraftrichtung des Bandes 15 genau auf die Schwenkachse 7 gerichtet ist. Oberhalb dieses Totpunktes würde die Kraft der Feder 14 der weiteren Verschwenkung des Schutzbügels 4 entgegenwirken. Die Länge der Feder 14 und des Bandes 15 sind so festgelegt, daß in etwa ab dem Totpunkt die Feder vollständig zusammengezogen ist, so daß die Feder 14 keinerlei Zugkraft mehr auf das Netz 10 ausüben kann. Dies ist oberhalb des dargestellten Totpunktes auch gar nicht mehr notwendig, da sich erfahrungsgemäß das Netz 10 in diesem Bereich des Schwenkweges des Schutzbügels 4 immer problemlos aufreiht.

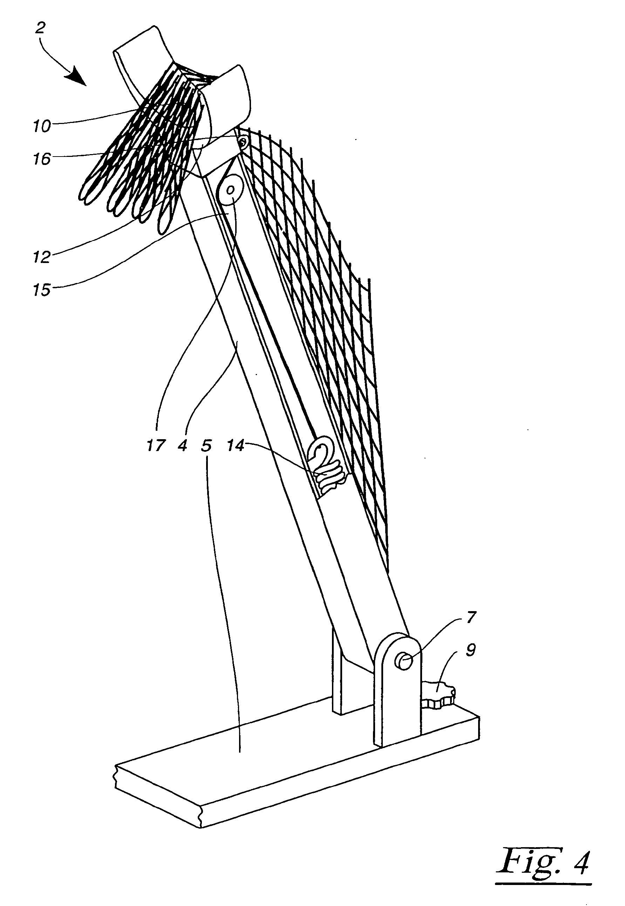

Schließlich zeigt die Figur 4 die Detaildarstellung gemäß Figur 3 in der Freigabestellung. Dabei ist das Netz 10 im Netzfänger 12 aufgereiht.

### Bezugszeichenliste

- 1: Fahrzeug
- 1a: Dachkonstruktion
- 1b: Hebewerkzeug
- 2: Rückhaltevorrichtung
- 3: Fahrersitz
- 4: Schutzbügel
- 5: Halterung
- 7: Schwenkachse
- 8, 9: Haltemittel
- 10: Netz
- 11: freies Ende
- 12: Netzfänger
- 13: Vorderkante
- 14: Feder
- 15: Band
- 16: Öse
- 17: Umlenkung

## Patentansprüche

1. Rückhaltevorrichtung für einen Fahrer eines Fahrzeugs (1), das zumindest einen Fahrersitz (3) aufweist, insbesondere eines Flurförderfahrzeugs, wobei die Rückhaltevorrichtung (2) von mindestens einem seitlich neben dem Fahrersitz (3) angeordneten Schutzbügel (4) gebildet ist, der durch eine in etwa horizontale, quer zur Fahrzeuglängserstreckung verlaufende Achse (7) aus einer in etwa vertikalen Freigabestellung in eine in etwa horizontale Rückhaltestellung verschwenkbar ist, wobei am Schutzbügel (4) und am Fahrzeug (1) mindestens ein Netz (10) festgelegt ist, **dadurch gekennzeichnet, daß** am Netz (10) mindestens eine Feder (14) angreift, die das Netz (10) beim Verschwenken des Schutzbügels (4) über wenigstens einen Teil des Schwenkweges gegen den Schutzbügel (4) zieht.

2. Rückhaltevorrichtung nach Anspruch 1, **dadurch gekennzeichnet, daß** die Feder (14) einen Federweg aufweist, der ausreicht, um einen Zug der Feder (14) auf das Netz (10) innerhalb eines Schwenkweges auszuüben, der von der Rückhaltestellung bis mindestens zur Winkelhalbierenden zwischen der Rückhaltestellung und einer Totpunktstellung reicht, wobei die Zugkraft der Feder (14) auf das Netz (10) in der Totpunktstellung zur Schwenkachse (7) des Schutzbügels (4) gerichtet ist.

3. Rückhaltevorrichtung nach Anspruch 2, **dadurch gekennzeichnet, daß** der Federweg ausreicht, um den Zug der Feder (14) auf das Netz (10) innerhalb eines Schwenkwinkels zu ermöglichen, der von der Rückhaltestellung bis zur Totpunktstellung reicht.

4. Rückhaltevorrichtung nach mindestens einem der Ansprüche 1 bis 3, **dadurch gekennzeichnet, daß** die Feder (14) nahe einer Vorderkante (13) des Netzes (10) angreift.

5. Rückhaltevorrichtung nach mindestens einem der Ansprüche 1 bis 4, **dadurch gekennzeichnet, daß** die Feder (14) an mehreren Punkten am Netz (10) angreift.

6. Rückhaltevorrichtung nach mindestens einem der Ansprüche 1 bis 5, **dadurch gekennzeichnet, daß** die Feder (14) im Schutzbügel (4) vorgesehen ist, wobei der Feder (14) mindestens eine Umlenkung (17) zugeordnet ist.

7. Rückhaltevorrichtung nach Anspruch 6, **dadurch gekennzeichnet, daß** die Feder (14) mit einem am Netz (10) angreifenden Band (15) verbunden ist, das über die Umlenkung (17) geführt ist.

8. Rückhaltevorrichtung nach mindestens einem der Ansprüche 1 bis 7, **dadurch gekennzeichnet, daß** die Feder (14) aus einem Elastomer besteht.

9. Rückhaltevorrichtung nach mindestens einem der Ansprüche 1 bis 8, **dadurch gekennzeichnet, daß** der Schutzbügel (4) verschwenkbar an einem Halter (5) gehalten ist, der am Fahrzeug (1) über Haltemittel (8, 9) festgelegt ist, die zumindest im Bereich des freien Endes (11) des Schutzbügels (4) von mindestens einer Steckverbindung realisiert sind.

10. Rückhaltevorrichtung nach mindestens einem der Ansprüche 1 bis 9, **dadurch gekennzeichnet, daß** am freien Ende (11) des Schutzbügels (4) mindestens ein Netzfänger (12) vorgesehen ist.

## Claims

1. Retention device for a driver of a vehicle (1) which has at least one driver's seat (3), in particular of an industrial truck, wherein the retention device (2) is formed by at least one protective bracket (4) which is arranged laterally next to the driver's seat (3) and is pivotable from an approximately vertical release position into an approximately horizontal retention position by an approximately horizontal spindle (7) running transversely with respect to the longitudinal extent of the vehicle, wherein at least one net (10) is fixed to the protective bracket (4) and to the vehicle (1), **characterized in that** at least one spring (14) acts on the net (10), the spring pulling the net (10) towards the protective bracket (4) over at least part of the pivoting path during the pivoting of the protective bracket (4).

2. Retention device according to Claim 1, **characterized in that** the spring (14) has a spring deflection which suffices to exert a tension of the spring (14) on the net (10) within a pivoting path which reaches from the retention position as far as at least to the bisector between the retention position and a dead centre position, wherein the tensile force of the spring (14) applied to the net (10) in the dead centre position is directed towards the pivoting spindle (7) of the protective bracket (4).

3. Retention device according to Claim 2, **characterized in that** the spring deflection suffices to permit the tension of the spring (14) to be applied to the net (10) within a pivoting angle which reaches from the retention position as far as the dead centre position.

4. Retention device according to at least one of Claims 1 to 3, **characterized in that** the spring (14) acts in the vicinity of a front edge (13) of the net (10).

5. Retention device according to at least one of Claims 1 to 4, **characterized in that** the spring (14) acts on the net (10) at a plurality of points.

6. Retention device according to at least one of Claims 1 to 5, **characterized in that** the spring (14) is provided in the protective bracket (4), the spring (14) being assigned at least one deflecting means (17).

7. Retention device according to Claim 6, **characterized in that** the spring (14) is connected to a band (15) which acts on the net (10) and is guided via the deflecting means (17).

8. Retention device according to at least one of Claims 1 to 7, **characterized in that** the spring (14) consists of an elastomer.

9. Retention device according to at least one of Claims 1 to 8, **characterized in that** the protective bracket (4) is held pivotably on a holder (5) which is fixed to the vehicle (1) via holding means (8, 9) which are realized by at least one plug-in connection at least in the region of the free end (11) of the protective bracket (4).

10. Retention device according to at least one of Claims 1 to 9, **characterized in that** at least one net catcher (12) is provided at the free end (11) of the protective bracket (4).

## Revendications

1. Dispositif de retenue pour un conducteur d'un véhicule (1), qui présente au moins un siège de conducteur (3), en particulier d'un chariot de manutention, le dispositif de retenue (2) étant formé par au moins un arceau de protection (4) disposé latéralement à côté du siège de conducteur (3), lequel arceau de protection peut pivoter depuis une position de libération approximativement verticale dans une position de retenue approximativement horizontale par le biais d'un axe (7) s'étendant approximativement horizontalement et transversalement à l'étendue longitudinale du véhicule, au moins un filet (10) étant fixé sur l'arceau de protection (4) et sur le véhicule (1), **caractérisé en ce qu'**au moins un ressort (14) vient en prise sur le filet (10) et tire le filet (10) lors du pivotement de l'arceau de protection (4) sur au moins une partie de la course de pivotement contre l'arceau de pivotement (4).

2. Dispositif de retenue selon la revendication 1, **caractérisé en ce que** le ressort (14) présente une course de ressort qui suffit pour exercer une traction du ressort (14) sur le filet (10) à l'intérieur d'une course de pivotement qui va de la position de retenue jusqu'à au moins la bissectrice de l'angle entre la position de retenue et une position de point mort, la force de traction du ressort (14) sur le filet (10) dans la position de point mort étant orientée vers l'axe de pivotement (7) de l'arceau de protection (4).

3. Dispositif de retenue selon la revendication 2, **caractérisé en ce que** la course du ressort suffit pour permettre la traction du ressort (14) sur le filet (10) à l'intérieur d'un angle de pivotement qui va de la position de retenue jusqu'à la position de point mort.

4. Dispositif de retenue selon au moins l'une quelconque des revendications précédentes 1 à 3, **caractérisé en ce que** le ressort (14) vient en prise à proximité d'une arête avant (13) du filet (10).

5. Dispositif de retenue selon au moins l'une quelconque des revendications précédentes 1 à 4, **caractérisé en ce que** le ressort (14) vient en prise au niveau de plusieurs points sur le filet (10).

6. Dispositif de retenue selon au moins l'une quelconque des revendications précédentes 1 à 5, **caractérisé en ce que** le ressort (14) est prévu dans l'arceau de protection (4), au moins un renvoi (17) étant associé au ressort (14).

7. Dispositif de retenue selon la revendication 6, **caractérisé en ce que** le ressort (14) est connecté à une bande (15) venant en prise avec le filet (10), qui est guidée sur le renvoi (17).

8. Dispositif de retenue selon au moins l'une quelconque des revendications 1 à 7, **caractérisé en ce que** le ressort (14) se compose d'un élastomère.

9. Dispositif de retenue selon au moins l'une quelconque des revendications 1 à 8, **caractérisé en ce que** l'arceau de protection (4) est maintenu de manière pivotante sur un support (5) qui est fixé au véhicule (1) par le biais de moyens de retenue (8, 9) qui sont réalisés au moins dans la région de l'extrémité libre (11) de l'arceau de protection (4) par au moins une connexion par enfichage.

10. Dispositif de retenue selon au moins l'une quelconque des revendications 1 à 9, **caractérisé en ce qu'**au moins un organe de réception de filet (12) est prévu à l'extrémité libre (11) de l'arceau de protection (4).
